# FASCICULE DE BREVET EUROPEEN

(11) **EP 4 351 890 B1**
(45) Date de publication et mention de la délivrance du brevet: **07.05.2025**
(21) Numéro de dépôt: 22740940.6
(22) Date de dépôt: 08.06.2022
(51) Int. Cl.: B60C 15/02, B60C 15/024, B60B 21/12, B60B 25/04, B60B 25/08, B60B 25/10, B60B 25/12, B60C 3/04, B60C 5/16, B60B 21/10, B60B 7/00, B60B 7/01

(54) **EXTENSEUR A STYLISME PERFECTIONNÉ ET ENSEMBLE ROULANT COMPORTANT UN TEL EXTENSEUR**
VERBESSERTER ADAPTER UND ROLLENDE ANORDNUNG MIT EINEM SOLCHEN ADAPTER
IMPROVED ADAPTER AND ROLLING ASSEMBLY COMPRISING SUCH AN ADAPTER

(30) Priorité: 08.06.2021 FR 2106042
(43) Date de publication de la demande: 17.04.2024
(73) Titulaire: COMPAGNIE GENERALE DES ETABLISSEMENTS MICHELIN, 63000 Clermont-Ferrand (FR)
(72) Inventeur: WALSER, Daniel, 63040 CLERMONT-FERRAND Cedex 9 (FR); VEDY, Bertrand, 63040 CLERMONT-FERRAND Cedex 9 (FR)
(74) Mandataire: M.F.P. Michelin
(86) Numéro de dépôt international: PCT/FR2022/051085
(87) Numéro de publication internationale: WO 2022/258922

(56) Documents cités:
- WO-A1-2016/046197
- WO-A1-2018/007751
- JP-A- H08 216 602
- KR-U- 20140 005 829

## Description

L'invention a pour objet un extenseur pour un ensemble roulant constitué par un pneumatique et une jante rigide reliés ensemble par un extenseur apte à offrir une certaine flexibilité élastique lors d'un choc subi pendant le roulement, ainsi qu'un ensemble roulant le comportant. Un pneumatique comprend, comme on le sait, deux bourrelets destinés à être montés sur les sièges d'une jante. La présente invention concerne les ensembles roulants dans lesquels un bourrelet de pneumatique n'est pas monté directement sur une jante rigide, mais est monté sur un extenseur flexible, extenseur qui, lui, est monté sur une jante rigide.

Un pneumatique, une jante, ainsi qu'un extenseur dont il est question dans la présente invention sont usuellement décrits par une représentation dans un plan méridien, c'est-à-dire un plan contenant l'axe de rotation du pneumatique. Tous ces produits (le pneumatique, la jante, l'extenseur) sont des objets ayant une géométrie de révolution par rapport à l'axe de rotation du pneumatique. Les directions radiale et axiale désignent respectivement les directions, la première, perpendiculaire à l'axe de rotation du pneumatique, et la seconde, parallèle à l'axe de rotation du pneumatique. Dans ce qui suit, les expressions « radialement » et « axialement » signifient respectivement « selon une direction radiale » et « selon la direction axiale ». Les expressions « radialement intérieur, respectivement radialement extérieur » signifient « plus proche, respectivement plus éloigné, de l'axe de rotation du pneumatique, selon une direction radiale ». Un plan médian est un plan perpendiculaire à l'axe de rotation du pneumatique, positionné axialement de façon à couper la surface de la bande de roulement sensiblement à mi-distance des bourrelets d'un pneumatique. Les expressions « axialement intérieur, respectivement axialement extérieur » signifient « plus proche, respectivement plus éloigné, du plan médian du pneumatique, selon la direction axiale ». Par ailleurs, par « coupe radiale » ou « section radiale », on entend une coupe ou une section selon un plan qui contient l'axe de rotation du pneumatique. Par « coupe méridienne » on comprend une coupe réalisée avec un plan méridien et, par plan méridien, on entend un plan parallèle à et contenant l'axe de rotation du pneumatique et perpendiculaire à la direction circonférentielle. Par « circonférentiellement » on comprend selon une direction circonférentielle, la direction qui est sensiblement perpendiculaire à la fois à la direction axiale et à un rayon du pneumatique (en d'autres termes, tangente à un cercle dont le centre est sur l'axe de rotation du pneumatique).

Le document WO2016/046197 décrit un exemple d'extenseur flexible agencé entre un bourrelet de pneumatique et une jante. L'ensemble roulant selon ce document comprend un pneumatique, une jante et deux extenseurs identiques. En considérant les conventions de langage rappelées ci-dessus, et en se reportant à la façon dont on monte un extenseur sur une jante, un tel extenseur comprend, axialement de l'intérieur vers l'extérieur, une extrémité axialement intérieure appelée bourrelet d'extenseur et destinée à assurer l'accrochage de l'extenseur sur la jante. Un tel extenseur comprend aussi une extrémité axialement extérieure destinée à recevoir et immobiliser axialement un bourrelet de pneumatique. Un corps muni d'une armature de renfort relie les deux extrémités respectivement axialement intérieure et axialement extérieure.

Les extenseurs sont montés sur une jante qui est une pièce métallique, la plupart du temps en aluminium. La jante présente de chaque côté un crochet de jante destiné à assurer en particulier l'immobilisation en direction axiale de l'extenseur. Un extenseur flexible doit, d'une part, présenter une certaine flexibilité élastique par exemple lors d'un choc contre un trottoir ou lors du passage dans un « nid de poule » et, d'autre part, il doit présenter suffisamment de rigidité en roulage afin de conférer un comportement correct au véhicule. Pour ceci, on réalise un tel extenseur dans des matériaux élastomériques, matériaux proches de ceux utilisés pour la fabrication du pneumatique dont il emprunte l'apparence.

Ainsi, un ensemble roulant comportant une jante, et un pneumatique monté sur la jante moyennant deux extenseurs, présente l'apparence d'une roue plus petite en diamètre que celle d'une roue classique utilisée avec un pneumatique de même dimension. Or, la tendance actuelle de design est d'avoir une roue la plus grande possible, au moins dans son apparence visuelle.

Une solution a été proposée dans le document WO201807751 au nom de la demanderesse, solution qui consiste à rapporter un anneau enjoliveur sur la partie visible de l'extenseur. Cet anneau enjoliveur est choisi pour être déformable élastiquement, il est d'un seul tenant et il est fixé par le biais d'un accrochage mécanique ou par collage sur toute la périphérie de la partie visible de l'extenseur. Or, il a été constaté que l'exigence de flexibilité pour l'anneau enjoliveur amène la contrainte du choix du matériau de celui-ci. Ainsi, lorsqu'on choisit un matériau métallique pour l'anneau enjoliveur, la déformation subie par l'extenseur et, par conséquent, par l'anneau enjoliveur, laisse des traces permanentes sur l'anneau en raison d'une déformation plastique locale. On a alors plutôt recours à l'utilisation de matériaux synthétiques souples. Dans ce cas, en raison de leur souplesse, ces matériaux synthétiques souples doivent être teintés dans la masse (au lieu d'être recouverts d'une peinture, comme dans le cas des surfaces métalliques). Ce type de coloration ne peut pas conférer un aspect de brillance, comme souhaité par les designers de roues de véhicule. De surcroît, pour des raisons pratiques de réalisation, généralement par injection dans un moule, et pour compenser le module d'élasticité plutôt faible du matériau synthétique constituant l'anneau enjoliveur, l'épaisseur de cet anneau est assez importante et provoque donc une exposition plus grande au râpage contre un trottoir. De ce fait, cela crée des problèmes de rayure en surface de l'anneau enjoliveur, voire de perte de celui-ci à la suite de sa désolidarisation du support.

Le but de l'invention est de remédier aux inconvénients précités et de proposer une solution originale de stylisme pour un extenseur permettant une fixation robuste des éléments de designs, même en cas de grandes déformations de l'extenseur ou lorsque la roue tourne à grande vitesse, tout en offrant une perception visuelle d'une roue de grand diamètre.

L'invention a donc pour objet un extenseur pour un ensemble roulant d'axe de rotation X-X' comprenant un pneumatique, ayant deux bourrelets et une jante, l'extenseur étant destiné à assurer la jonction entre l'un des bourrelets et la jante, ledit extenseur comprenant une extrémité axialement intérieure, une extrémité axialement extérieure et un corps orienté principalement axialement et disposé entre ladite extrémité axialement extérieure et ladite extrémité axialement intérieure, de sorte que, lorsqu'il est monté au sein de l'ensemble, ladite extrémité axialement intérieure est destinée à être immobilisée sur ladite jante à l'aide d'un élément de renfort intérieur, ladite extrémité axialement extérieure comprenant un élément de renfort extérieur est destinée à recevoir un bourrelet de pneumatique, caractérisé en ce que l'extrémité axialement extérieure comporte une face visible réalisée de manière à laisser apparaître les faces axialement extérieures de plusieurs inserts fixés sur l'extenseur et répartis sur la circonférence de ladite face visible.

Par extenseur selon l'invention, on comprend un extenseur flexible, apte à se déformer élastiquement principalement dans une direction radiale lorsqu'il est soumis à un effort, tel que subi quand la roue heurte un trottoir. Selon l'invention, l'extenseur comporte plusieurs inserts montés fixes (ou indémontables) en étant répartis sur la circonférence de ladite face visible de l'extenseur (on comprend que la face est visible lorsqu'on regarde une roue montée sur le véhicule, la roue comportant un extenseur monté sur la jante), de manière à ce que les inserts puissent être visibles également. Les inserts de l'extenseur peuvent être collés individuellement dans des logements en une matière élastomérique obtenus après la cuisson de l'extenseur ou ils peuvent être disposés dans le moule de cuisson au préalable et solidarisés à l'extenseur durant la cuisson de celui-ci.

Par inserts répartis sur la circonférence, on comprend que deux inserts sont situés côte-à-côte de manière à ce qu'un espace subsiste entre les deux, permettant de créer des ponts de matière élastomérique entre les inserts, et cela sur toute la circonférence de la face visible de l'extrémité axialement extérieure de l'extenseur. La face visible est de préférence une face frontale de l'extenseur. Les inserts selon l'invention sont des inserts rigides indépendants ou reliés entre eux par des liens déformables, tout en étant solidaires de l'extenseur. Ainsi, les inserts étant plutôt rigides, par exemple métalliques, la zone qui sépare deux inserts fixés dans leurs cavités respectives est, elle, souple. De préférence, les inserts et les espaces séparant deux inserts adjacents sont choisis d'assez petite taille, leurs tailles étant du même ordre de grandeur que la déformation locale subie par l'extenseur en cas d'un choc contre un trottoir par exemple. Ceci permet à l'extenseur d'absorber une déformation en cas de choc subi par la roue, sans incidence sur l'aspect extérieur de l'extenseur et donc tout en gardant son design initial. Ainsi, en cas de choc subi par la roue, l'extenseur souple de déforme et les inserts rigides qui y sont fixés conservent leur forme et leur configuration.

La solution de l'invention est compatible avec des hauts niveaux de déformation rencontrés par exemple lors d'un choc contre un trottoir d'un ensemble roulant comportant un extenseur de l'invention et cela en raison de la dissociation entre eux des éléments rapportés sur la surface extérieure visible de l'extenseur. Cette dissociation permet de couper la transmission des contraintes liées à une déformation imposée, présente dans un anneau enjoliveur réalisé sous forme d'une pièce d'un seul tenant, contraintes d'autant plus grandes que le module d'élasticité de la pièce concernée est grand.

Lesdits inserts peuvent être en une matière métallique. Ainsi, en disposant une pluralité d'inserts sur la circonférence de l'extrémité axialement extérieure de l'extenseur, cela permettra de lui conférer un aspect globalement métallique et de conférer à la roue une apparence de roue de grand diamètre.

Ladite surface visible peut être la face la plus axialement à l'extérieur de ladite extrémité axialement extérieure et les inserts peuvent être protubérants par rapport à cette face. Ainsi, lorsque les inserts sont protubérants par rapport à la face la plus axialement à l'extérieur de l'extenseur, ils arrivent à protéger les surfaces en matière élastomérique de l'extenseur, surfaces se trouvant de ce fait plus en retrait, lors d'un râpage trottoir. De préférence, par surface visible on entend celle de la face axialement extérieure de l'extenseur extérieur. L'extenseur intérieur peut, lui, être identique ou différent à l'extenseur extérieur, par exemple lorsqu'il est différent, il ne comporte pas d'inserts rapportés.

Lesdits inserts peuvent être réalisées sous forme de plusieurs éléments individuels reliés entre eux à leur base. Ceci facilite leur fixation à l'extenseur plus particulièrement lors d'une opération de surmoulage lors de la cuisson.

Lesdits inserts peuvent être des éléments individuels séparés. Cette variante de réalisation se prête mieux au collage des inserts dans des logements prévus à cet effet sur l'extenseur après cuisson.

Lesdits inserts peuvent avoir une forme allongée, leur longueur pouvant être au plus égale à la largeur de ladite face visible de l'extrémité axialement extérieure de l'extenseur. Les inserts occupent ainsi une partie de la largeur de la circonférence de l'extrémité axialement extérieure de l'extenseur, ce qui permet d'obtenir un aspect visuel d'une roue de grand diamètre, et cela même en augmentant l'espace entre deux inserts adjacents.

Lesdits inserts peuvent être uniformément répartis sur la circonférence de ladite face visible de l'extenseur. Les inserts peuvent être espacés d'un pas supérieur ou inférieur à leur largeur.

Les logements desdits inserts peuvent comporter chacun plusieurs encoches pratiquées dans leurs parois. Cela permet de combler les encoches de l'empreinte ou le logement de l'insert par de l'adhésif, tout en maîtrisant l'épaisseur de la couche d'adhésif.

Lesdits inserts peuvent être agencés selon une direction radiale ou selon une direction qui forme un angle aigu constant avec la direction radiale de l'extenseur. Dans ce cas, les inserts peuvent être parallèles entre eux par groupes d'inserts, ils forment préférentiellement un angle constant avec la direction radiale.

L'objet de l'invention est aussi atteint avec un procédé de fabrication d'un extenseur selon l'invention, qui comprend une étape de moulage desdits inserts dans un même moule que celui de moulage de l'extenseur. Ceci permet d'obtenir l'objet final lors d'une seule opération de cuisson de l'ensemble extenseur et inserts.

L'objet de l'invention est également atteint avec un procédé de fabrication d'un extenseur selon l'invention, qui comprend une étape de collage desdits inserts dans des logements prévus à cet effet dans l'extrémité axialement extérieure de l'extenseur. Ceci permet l'obtention d'un extenseur de l'invention en collant les inserts dans des logements obtenus lors d'une étape préalable de cuisson de l'extenseur.

L'objet de l'invention est également atteint avec un ensemble roulant d'axe de rotation X-X' comprenant un pneumatique, ayant deux bourrelets, une jante et un extenseur selon l'invention destiné à assurer la jonction entre l'un des bourrelets et la jante.

L'invention est décrite ci-après à l'aide des figures 1 à 10, données uniquement à titre d'illustration :
- la figure 1 est une vue en coupe méridienne d'un ensemble roulant comportant un extenseur selon l'invention ;
- la figure 2 est une vue en perspective partielle d'un extenseur de l'invention ;
- la figure 3 est une vue de face partielle d'une face visible de l'extenseur selon un premier mode de réalisation de l'invention et le détail A-A est une vue en coupe selon le plan A-A ;
- la figure 4 est une vue en perspective partielle d'une face visible de l'extenseur selon une variante du mode de réalisation de la figure 3 ;
- la figure 5 est une vue en perspective partielle de l'extenseur selon un deuxième mode de réalisation de l'invention ;
- la figure 6 est une vue en perspective partielle des inserts utilisés pour obtenir l'extenseur de la figure 5 ;
- les figures 7, 8 et 9 illustrent par des vues de face partielles différents extenseurs de l'invention ;
- la figure 10 illustre un insert dans son logement au sein d'un extenseur de l'invention.

Sur les différentes figures, les éléments identiques ou similaires portent la même référence. Leur description n'est donc pas systématiquement reprise.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

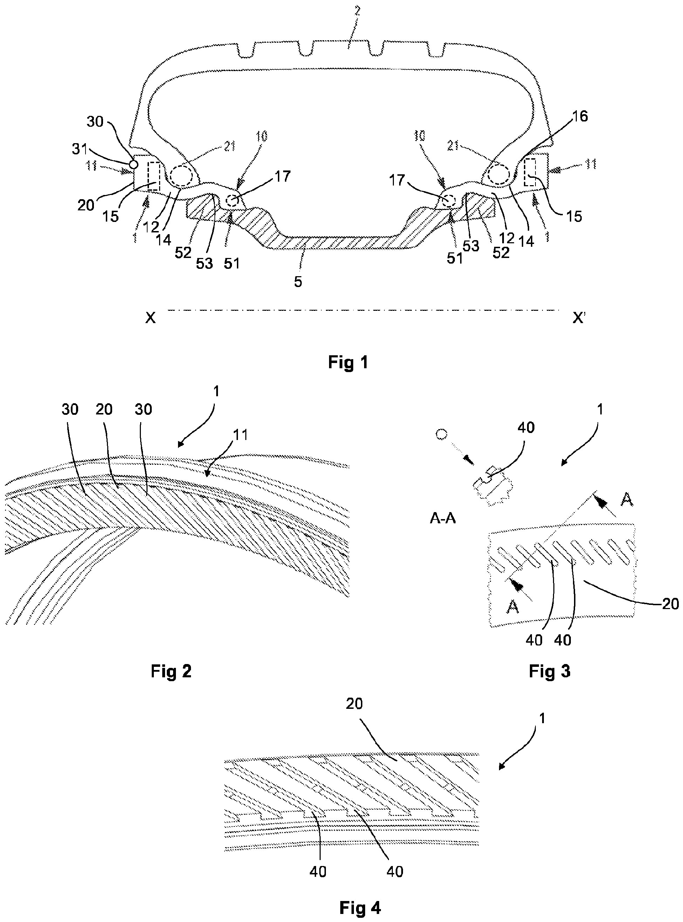

La figure 1 montre par une vue en coupe méridienne un ensemble roulant selon l'invention. Cet ensemble présente un axe de rotation X-X', il comprend deux extenseurs 1, un pneumatique 2 et une jante 5. Le pneumatique 2 comporte deux bourrelets 21. La jante 5 comporte deux sièges sur jante 51, chacun prolongé par un rebord 52 de jante. Le rebord 52 de jante comporte une face d'appui 53 radialement extérieure destinée à servir de support au corps de l'extenseur. La face d'appui 53 du rebord de jante 52 est en contact avec l'extenseur 1 lorsque le pneumatique est monté sur les extenseurs et que ceux-ci sont montés sur la jante, le pneumatique étant gonflé à la pression nominale.

L'extenseur 1 comporte une extrémité axialement intérieure 10 destinée à être montée sur l'un desdits sièges sur jante 51. Il comporte une extrémité axialement extérieure 11 munie d'un élément de renfort extérieur 15, qui est de forme annulaire, réalisé par exemple à base d'un enroulement de câbles, ainsi qu'un corps 12 orienté sensiblement axialement et disposé entre ladite extrémité axialement extérieure 11 et ladite extrémité axialement intérieure 10. L'extrémité axialement intérieure 10 de l'extenseur a une face de positionnement axial sensiblement perpendiculaire à l'axe de rotation X-X', et est immobilisée en étant plaquée axialement contre le rebord 52 de jante sous l'effet de la pression de gonflage du pneumatique 2 et grâce à une gorge de la jante la contenant. L'extrémité axialement extérieure 11 présente un épaulement 16 formant une face sensiblement perpendiculaire à l'axe de rotation X-X'. Ledit extenseur 1 comporte un siège sur extenseur 14 qui reçoit le bourrelet 21 du pneumatique. Le bourrelet 21 est immobilisé en étant plaqué axialement sur ledit siège 14 contre ledit épaulement 16 de l'extrémité axialement extérieure 11 de l'extenseur, sous l'effet de la pression de gonflage du pneumatique.

L'extrémité axialement intérieure 10 de l'extenseur comprend un élément de renfort intérieur 17 (réalisé préférentiellement sous forme d'un enroulement de câbles) relié à l'élément de renfort extérieur 15 par une nappe de renfort réalisée à base de fils de renfort noyés dans une composition élastomérique et forme avec les éléments de renfort 15, 17 une structure interne de l'extenseur. D'autres nappes élastomériques externes entourent la structure interne de l'extenseur.

Le montage de l'ensemble se fait en agençant l'extenseur 1 sur la jante 5 et ensuite en montant le pneumatique 2 sur l'extenseur 1. Une fois le montage effectué, le bourrelet du pneumatique impose une contraction circonférentielle de l'extenseur 1.

L'extrémité axialement extérieure 11 de l'extenseur 1 de l'invention comporte une face visible 20 réalisée de manière à laisser apparaître les faces axialement extérieures 31 de plusieurs inserts 30 fixés sur l'extenseur 1 et répartis sur la circonférence de ladite face visible 20. Dans la variante illustrée à la figure 1, les inserts 30 sont protubérants par rapport à la surface plane de la face visible 20. Dans d'autres variantes, les faces axialement le plus à l'extérieur des inserts 30 sont situées au niveau de la surface visible 20. Dans d'autres variantes, les faces axialement le plus à l'extérieur des inserts sont situées axialement plus à l'intérieur par rapport au niveau de la face visible 20, mais ces inserts sont visibles grâce à des découpes réalisées dans la surface de la face visible 20 permettant de voir tout ou partie des faces axialement extérieures des inserts montés fixes sur l'extenseur.

La figure 2 illustre un extenseur 1 de l'invention dont l'extrémité axialement extérieure 11 comprend une face visible 20 dont la circonférence est munie de plusieurs inserts 30 uniformément répartis sur sa circonférence.

Dans un premier mode de réalisation, les inserts 30 sont fixés par collage dans des logements 40 obtenus lors de la cuisson de l'extenseur. Les logements 40 ont une section transversale en arc de cercle (fig. 3) ou en queue d'aronde (fig. 4). Les logements 40 des figures 3 et 4 ont une forme générale allongée et sont de préférence inclinés, ils font un angle compris entre 30 et 60° avec la direction circonférentielle de l'extenseur. Les inserts 30 ont une forme générale allongée et sont fixés à demeure ou de manière indémontable en utilisant un adhésif approprié. Par exemple, lorsque les aiguilles sont métalliques, on utilise un adhésif du type cyanolite pour assurer leur bonne fixation par collage dans des logements réalisés, eux, dans une matière élastomérique.

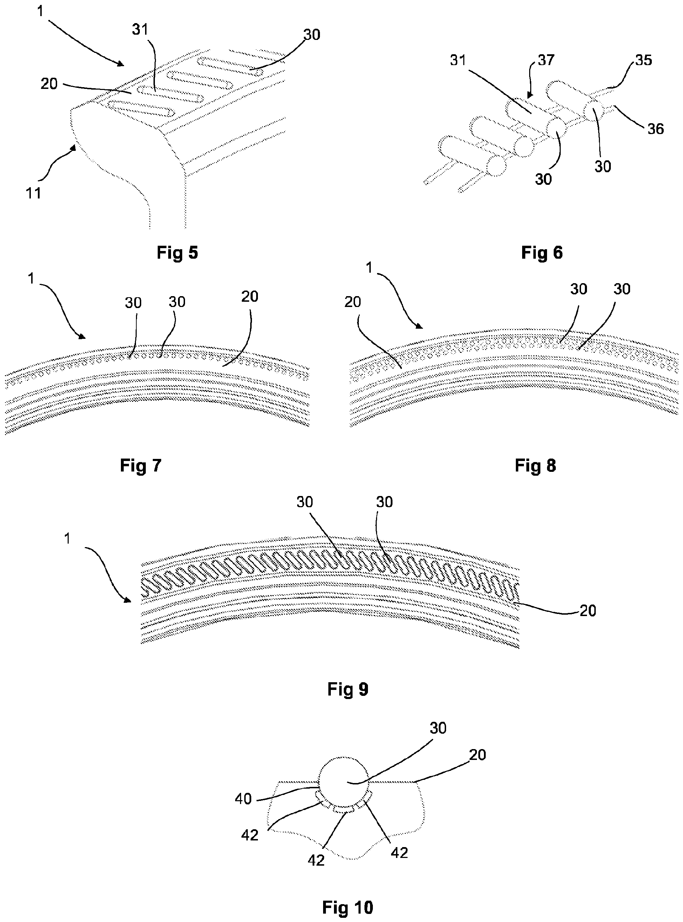

La figure 10 illustre par une vue agrandie un insert 30 dans un logement 40 muni de plusieurs encoches 42 pratiquées dans ses parois. Les encoches 42 reçoivent de la colle et permettent de maîtriser l'épaisseur de la couche de colle appliquée pour une meilleure tenue de la fixation de l'insert 30.

Dans un deuxième mode de réalisation, les inserts 30 sont solidarisés de l'extenseur en étant moulés dans un même moule et en même temps que celui-ci. Dans ce mode de réalisation, tel que mieux visible à la fig. 6, les inserts 30 sont reliés à leur base par deux cerceaux 35, 36 de fil métallique et forment un ensemble unitaire 37. L'ensemble 37 est disposé au fond d'un moule prévu pour la cuisson de l'extenseur 1 avant la cuisson. L'ébauche d'extenseur est rajoutée dans le moule qui est ensuite fermé et chauffé pour réaliser la cuisson de l'ensemble de l'extenseur et des inserts. Après cuisson, l'extenseur 1 est extrait du moule et est du type mieux visible à la figure 5. On remarque ainsi qu'uniquement les faces axialement supérieures 31 des inserts 30 sont visibles, le reste de l'ensemble 37 étant noyé dans la masse à base de matière élastomérique de l'extenseur 1.

Les figures 7 à 9 illustrent différents exemples de design d'extenseur 1 de l'invention. La figure 7 illustre une variante dans laquelle les inserts 30 ont une forme sphérique et sont fixés par collage dans des logements en forme de calotte sphérique correspondante. La figure 8 illustre une autre variante d'extenseur comprenant deux rangées d'inserts 30 de forme sphérique. La figure 9 illustre une variante dans laquelle les inserts 30 ont une forme d'aiguille cylindrique à bords arrondis. Dans une autre variante (non illustrée sur les figures) les têtes des inserts sont des plaquettes, par exemple de forme triangulaire.

A titre d'exemple, un extenseur 1 permettant le montage d'un pneu de 20" sur une jante peut comporter un nombre de 200 à 300 d'inserts de forme allongée, tel qu'illustré à la figure 9, les inserts ayant une longueur comprise entre 9 mm et 15 mm et une largeur comprise entre 2 mm et 4 mm.

Les inserts 30 sont de préférence métalliques, ils sont par exemple réalisés en acier inoxydable ou en aluminium anodisé ou encore en acier revêtu d'une peinture et d'un vernis. Dans une variante, ils sont en un matériau plastique métallisé. Dans une autre variante, ils sont réalisés en une matière plastique colorée. Dans encore une autre variante, les inserts ont des couleurs différentes, elles sont de préférence de toutes les couleurs d'un arc-en-ciel de manière à ce que, lors de la rotation de la roue, les inserts produisent l'impression d'une couleur blanche.

Il a été constaté lors des tests effectués en laboratoire qu'un ensemble roulant comportant un extenseur selon l'invention reliant une roue de 20" à sa jante peut subir sans dégâts un choc contre un trottoir de 90 mm à une vitesse de 55 km/h et cela sans aucun impact sur l'aspect de l'extenseur ni sur la tenue des inserts. Un même choc subi par un ensemble roulant selon le document WO201807751 de la technique conduit à un décrochement de l'anneau enjoliveur vers 15 km/h.

L'invention ne se limite pas aux modes de réalisation décrits précédemment. Ainsi, on peut envisager différentes autres formes d'inserts (en forme de cube, de parallélépipède, en forme de pyramide, ou autre solide tridimensionnel) fixés par collage sur l'extenseur ou par moulage avec celui-ci.

En effet, on pourra combiner les différents modes de réalisation décrits-ci-dessus, notamment combiner les moyens de fixation des inserts des figures 5 à 6 à ceux des figures 7 à 9.

Par ailleurs, au moins un des inserts de l'extenseur de l'invention peut être une pièce offrant certaines fonctionnalités, tel un capteur d'accélération ou une puce d'identification ou d'antivol, voire de stockage d'énergie ou autre, auquel cas elle sera fixée par collage à l'extenseur.

## Revendications

1. Extenseur (1) pour un ensemble roulant d'axe de rotation X-X' comprenant un pneumatique (2), ayant deux bourrelets (21) et une jante (5), l'extenseur (1) étant destiné à assurer la jonction entre l'un des bourrelets (21) et la jante (5), ledit extenseur (1) comprenant une extrémité axialement intérieure (10), une extrémité axialement extérieure (11) et un corps (12) orienté principalement axialement et disposé entre ladite extrémité axialement extérieure (11) et ladite extrémité axialement intérieure (10), de sorte que, lorsqu'il est monté au sein de l'ensemble, ladite extrémité axialement intérieure (10) est destinée à être immobilisée sur ladite jante à l'aide d'un élément de renfort intérieur (17), ladite extrémité axialement extérieure comprenant un élément de renfort extérieur (15) est destinée à recevoir un bourrelet (21) de pneumatique (2), **caractérisé en ce que** l'extrémité axialement extérieure (11) comporte une face visible (20) réalisée de manière à laisser apparaître les faces axialement extérieures (31) de plusieurs inserts (30) fixés sur l'extenseur (1) et répartis sur la circonférence de ladite face visible (20).

2. Extenseur selon la revendication 1, dans lequel lesdits inserts (30) sont en une matière métallique.

3. Extenseur selon l'une des revendications 1 ou 2, **caractérisé en ce que** ladite surface visible (20) est la face la plus axialement à l'extérieur de ladite extrémité axialement extérieure (11) et **en ce que** les inserts (30) sont protubérants par rapport à cette face.

4. Extenseur selon l'une des revendications 1 à 3, **caractérisé en ce que** lesdits inserts (30) sont réalisées sous forme de plusieurs éléments individuels reliés entre eux à leur base.

5. Extenseur selon l'une des revendications 1 à 3, **caractérisé en ce que** lesdits inserts (30) sont des éléments individuels séparés.

6. Extenseur selon l'une des revendications précédentes, **caractérisé en ce que** lesdits inserts (30) ont une forme allongée, leur longueur étant au plus égale à la largeur de ladite face visible (20) de l'extrémité axialement extérieure de l'extenseur.

7. Extenseur selon la revendication 6, **caractérisé en ce que** lesdits inserts (30) sont uniformément répartis sur la circonférence de ladite face visible (20) de l'extenseur.

8. Extenseur selon l'une des revendications 5 à 7, **caractérisé en ce que** lesdits inserts sont fixés dans des logements (40) comportant chacun plusieurs encoches pratiquées dans ses parois.

9. Extenseur selon l'une des revendications précédentes, **caractérisé en ce que** lesdits inserts (30) sont agencés selon une direction radiale ou selon une direction qui forme un angle aigu constant avec la direction radiale de l'extenseur.

10. Procédé de fabrication d'un extenseur selon l'une des revendications précédentes, **caractérisé en ce qu'**il comprend une étape de moulage desdits inserts (30) en même temps et dans un même moule que celui de moulage de l'extenseur (1).

11. Procédé de fabrication d'un extenseur selon l'une des revendications 1 à 3 et 5 à 9, **caractérisé en ce qu'**il comprend une étape de collage desdits inserts (30) dans des logements prévus à cet effet dans l'extrémité axialement extérieure de l'extenseur.

12. Ensemble roulant d'axe de rotation X-X' comprenant un pneumatique (2), ayant deux bourrelets (21) une jante (5) et un extenseur (1) selon l'une des revendications 1 à 9 destiné à assurer la jonction entre l'un des bourrelets (21) et la jante (5).

## Patentansprüche

1. Adapter (1) für eine rollende Anordnung mit der Rotationsachse X-X', umfassend einen Reifen (2) mit zwei Wülsten (21) und eine Felge (5), wobei der Adapter (1) dazu bestimmt ist, die Verbindung zwischen einem der Wülste (21) und der Felge (5) zu gewährleisten, wobei der Adapter (1) ein axial inneres Ende (10), ein axial äußeres Ende (11) und einen Körper (12), der hauptsächlich axial ausgerichtet ist und zwischen dem axial äußeren Ende (11) und dem axial inneren Ende (10) angeordnet ist, umfasst, so dass, wenn er in der Anordnung montiert ist, das axial innere Ende (10) dazu bestimmt ist, auf der Felge mithilfe eines inneren Verstärkungselements (17) immobilisiert zu werden, das axial äußere Ende, das ein äußeres Verstärkungselement (15) umfasst, dazu bestimmt ist, einen Wulst (21) des Reifens (2) aufzunehmen, **dadurch gekennzeichnet, dass** das axial äußere Ende (11) eine sichtbare Fläche (20) aufweist, die so ausgeführt ist, dass sie die axial äußeren Flächen (31) von mehreren Einsätzen (30), die an dem Adapter (1) fixiert sind und über den Umfang der sichtbaren Seite (20) verteilt sind, erscheinen lässt.

2. Adapter nach Anspruch 1, wobei die Einsätze (30) aus einem metallischen Material sind.

3. Adapter nach einem der Ansprüche 1 oder 2, **dadurch gekennzeichnet, dass** die sichtbare Oberfläche (20) die axial äußerste Fläche des axial äußeren Endes (11) ist und dass die Einsätze (30) in Bezug auf diese Fläche vorspringen.

4. Adapter nach einem der Ansprüche 1 bis 3, **dadurch gekennzeichnet, dass** die Einsätze (30) in Form von mehreren einzelnen Elementen ausgeführt sind, die an ihrer Basis untereinander verbunden sind.

5. Adapter nach einem der Ansprüche 1 bis 3, **dadurch gekennzeichnet, dass** die Einsätze (30) getrennte einzelne Elemente sind.

6. Adapter nach einem der vorhergehenden Ansprüche, **dadurch gekennzeichnet, dass** die Einsätze (30) eine längliche Form haben, wobei ihre Länge höchstens gleich der Breite der sichtbaren Fläche (20) des axial äußeren Endes des Adapters ist.

7. Adapter nach Anspruch 6, **dadurch gekennzeichnet, dass** die Einsätze (30) gleichmäßig über den Umfang der sichtbaren Fläche (20) des Adapters verteilt sind.

8. Adapter nach einem der Ansprüche 5 bis 7, **dadurch gekennzeichnet, dass** die Einsätze in Aufnahmen (40) fixiert sind, die jeweils mehrere in ihren Wänden ausgebildete Aussparungen aufweisen.

9. Adapter nach einem der vorhergehenden Ansprüche, **dadurch gekennzeichnet, dass** die Einsätze (30) entlang einer radialen Richtung oder entlang einer Richtung, die einen konstanten spitzen Winkel mit der radialen Richtung des Adapters bildet, eingerichtet sind.

10. Verfahren zur Herstellung eines Adapters nach einem der vorhergehenden Ansprüche, **dadurch gekennzeichnet, dass** es einen Schritt des Formens der Einsätze (30) gleichzeitig und in einer selben Form wie derjenigen zum Formen des Adapters (1) umfasst.

11. Verfahren zur Herstellung eines Adapters nach einem der Ansprüche 1 bis 3 und 5 bis 9, **dadurch gekennzeichnet, dass** es einen Schritt des Klebens der Einsätze (30) in hierzu in dem axial äußeren Ende des Adapters vorgesehene Aufnahmen umfasst.

12. Rollende Anordnung mit der Rotationsachse X-X', umfassend einen Reifen (2) mit zwei Wülsten (21), eine Felge (5) und einen Adapter (1) nach einem der Ansprüche 1 bis 9, der dazu bestimmt ist, die Verbindung zwischen einem der Wülste (21) und der Felge (5) zu gewährleisten.

## Claims

1. Adapter (1) for a rolling assembly of rotation axis X-X' comprising a tyre (2), having two beads (21) and a rim (5), the adapter (1) being intended to provide the join between one of the beads (21) and the rim (5), said adapter (1) comprising an axially inner end (10), an axially outer end (11) and a body (12) oriented principally axially and arranged between said axially outer end (11) and said axially inner end (10), such that, when mounted within the assembly, said axially inner end (10) is intended to be immobilized on said rim by means of an inner reinforcing element (17), said axially outer end comprising an outer reinforcing element (15) is intended to receive a bead (21) of a tyre (2), **characterized in that** the axially outer end (11) includes a visible face (20) designed to reveal the axially outer faces (31) of several inserts (30) fastened to the extender (1) and distributed about the circumference of said visible face (20).

2. Adapter according to Claim 1, wherein said inserts (30) are made of metal.

3. Adapter according to one of Claims 1 or 2, **characterized in that** said visible surface (20) is the axially outermost face of said axially outer end (11) and **in that** the inserts (30) protrude from said face.

4. Adapter according to one of Claims 1 to 3, **characterized in that** said inserts (30) are made in the form of several individual elements connected to each other at their base.

5. Adapter according to one of Claims 1 to 3, **characterized in that** said inserts (30) are separate individual elements.

6. Adapter according to one of the preceding claims, **characterized in that** said inserts (30) have an elongated shape, their length being at most equal to the width of said visible face (20) of the axially outer end of the adapter.

7. Adapter according to Claim 6, **characterized in that** said inserts (30) are uniformly distributed about the circumference of said visible face (20) of the adapter.

8. Adapter according to one of Claims 5 to 7, **characterized in that** said inserts are fastened in seats (40) each comprising several notches made in the walls thereof.

9. Adapter according to one of the preceding claims, **characterized in that** said inserts (30) are arranged in a radial direction or in a direction which forms a constant acute angle with the radial direction of the adapter.

10. Method of manufacturing an adapter according to one of the preceding claims, **characterized in that** it comprises a step of moulding said inserts (30) at the same time and in the same mould as the adapter (1).

11. Method of manufacturing an adapter according to one of Claims 1 to 3 and 5 to 9, **characterized in that** it comprises a step of glueing said inserts (30) in seats provided for this purpose in the axially outer end of the adapter.

12. Rolling assembly of rotation axis X-X' comprising a tyre (2), having two beads (21), a rim (5) and an adapter (1) according to one of Claims 1 to 9 intended to provide the join between one of the beads (21) and the rim (5).
